**Europäisches Patentamt**

**European Patent Office**

**Office européen des brevets**

(19)

(11) Veröffentlichungsnummer: **0 132 687**
**B1**

(12)

# EUROPÄISCHE PATENTSCHRIFT

(45) Veröffentlichungstag der Patentschrift:
**07.01.88**

(21) Anmeldenummer: **84108041.9**

(22) Anmeldetag: **10.07.84**

(51) Int. Cl.⁴: **F 21 V 23/02, F 21 S 1/02**

(54) **Leuchte für eine Kompakt-Leuchtstofflampe.**

(30) Priorität: **18.07.83 DE 8320650 U**

(43) Veröffentlichungstag der Anmeldung:
**13.02.85 Patentblatt 85/7**

(45) Bekanntmachung des Hinweises auf die Patenterteilung:
**07.01.88 Patentblatt 88/1**

(84) Benannte Vertragsstaaten:
**DE FR GB IT NL SE**

(56) Entgegenhaltungen:
**AU - D - 89 796**
**CH - A - 429 938**
**DE - A - 1 489 390**
**DE - A - 2 944 967**
**FR - A - 1 216 361**

(73) Patentinhaber: **Patent-Treuhand-Gesellschaft für elektrische Glühlampen mbH, Hellabrunner Strasse 1, D-8000 München 90 (DE)**

(72) Erfinder: **Jendrewski, Alfons, Rudolf-Wilke-Weg 12, D-8000 München 71 (DE)**

## Beschreibung

Die Erfindung betrifft eine kompakte Leuchte für eine schlanke, einseitig gesockelte Kompakt-Leuchtstofflampe. Die Leuchte besteht aus einem Träger, einem im Träger mittels einer gesonderten Halterung befestigten Vorschaltgerät und elektrischen Anschlussteilen sowie einer die elektrischen Anschlussteile abdeckenden Kappe und einer die Lampe abdeckenden Haube, wobei Träger, Kappe und Haube aus Kunststoff bestehen und wobei zur Verteilung bzw. Ableitung der Wärme des Vorschaltgerätes am Träger eine Metallplatte angeordnet ist.

Aus der DE-A 1 489 390 ist eine Leuchtstofflampenleuchte bekannt, die ein tragendes Kunststoffgehäuse (Träger) aufweist und bei dem das Vorschaltgerät im Träger mittels einer Montagevorrichtung in Form einer Profilschiene befestigt ist, wobei diese – aus wärmeleitendem Material bestehende – Profilschiene zum gleichzeitig erfolgenden Ableiten der im Vorschaltgerät erzeugten Verlustwärme an der Gehäuseinnenwandung anliegt.

Nachteilig an dieser Anordnung ist, dass das Vorschaltgerät auf der den Lampen zugewandten Seite der Montagevorrichtung angeordnet ist, so dass weder eine Wärmeisolation noch eine elektrische Isolation zwischen diesen Komponenten vorhanden ist. Ein weiterer Nachteil ist, dass das von den Lampen in Richtung des Vorschaltgerätes abgestrahlte Licht die Wärmebelastung innerhalb der Leuchte zusätzlich erhöht und nicht für die Beleuchtung genutzt werden kann.

Aufgabe der Erfindung ist es, die geschilderten Nachteile zu vermeiden und insbesondere die Wärmebelastung innerhalb der Leuchte zu reduzieren und die Effizienz der Leuchte zu verbessern.

Die Aufgabe wird erfindungsgemäss bei einer Leuchte nach dem Oberbegriff des Hauptanspruchs dadurch gelöst, dass das Vorschaltgerät auf der dem Träger zugewandten Seite der Halterung befestigt ist, während die zur Lampe hin gewandte Seite der Halterung als Reflektor ausgebildet ist. Zum Verteilen und Abführen der vom Vorschaltgerät entwickelten Wärme ist am Träger eine Metallplatte angeordnet. Mit dieser Metallplatte wird erreicht, dass die Temperatur der Leuchte an der Befestigungsfläche, auch bei deren Anbringung an Stellen mit keiner oder nur geringer Luftzirkulation, beispielsweise beim Einbau in Möbeln, unter der von VDE vorgeschriebenen Grenztemperatur von 95°C liegt, obgleich das Vorschaltgerät eine höhere Temperatur erreicht.

Die weitere Ausgestaltung der Leuchte ist den Ansprüchen 2 bis 4 zu entnehmen und wird anhand eines in Zeichnungen dargestellten Ausführungsbeispiels näher beschrieben. Es zeigen

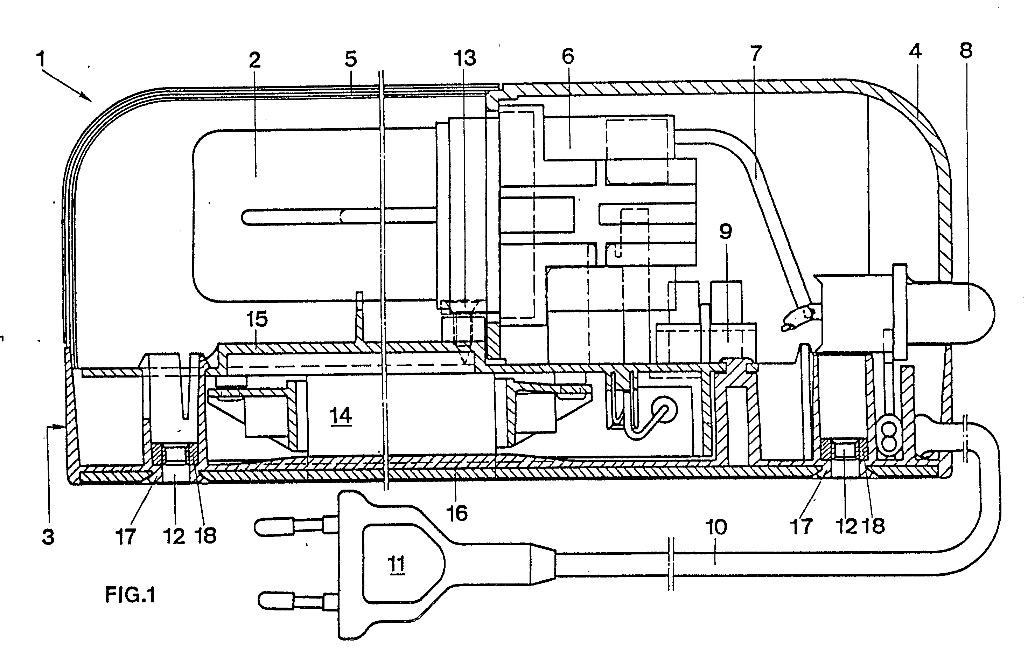

Figur 1 eine Ausführungsform der Leuchte in Seitenansicht, teilweise geschnitten

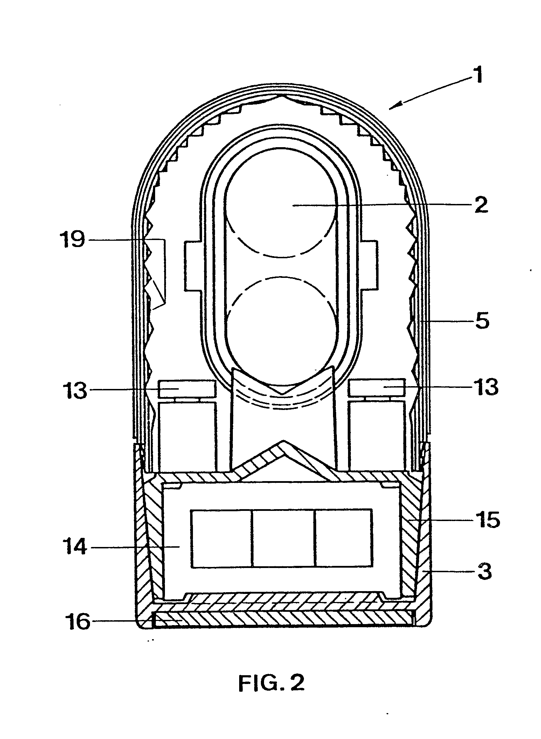

Figur 2 einen Querschnitt der Leuchte nach Figur 1.

Das in den Figuren dargestellte Gehäuse der erfindungsgemässen Leuchte 1 für eine schlanke, einseitig gesockelte Kompakt-Leuchtstofflampe 2 besteht aus einem Träger 3, einer Kappe 4 und einer Haube 5. Alle drei Gehäuseteile 3, 4, 5 sind aus Kunststoff gefertigt. An einem Ende des Trägers 3 sind elektrische Anschlussteile angeordnet. Diese bestehen aus einer Fassung, 6 elektrischen Leitungen 7, einem Schalter 8, Klemmen 9 und einem seitlich aus dem Träger 3 herausgeführten Anschlusskabel 10 mit Stecker 11. Bei einer Leuchte für Festanschluss ist das Anschlusskabel 10 durch die aus der Wand ragenden Kabel des elektrischen Stromnetzes ersetzt, wobei diese dann durch eine Öffnung im Trägerboden hindurchgeführt und an den Klemmen 9 angeschlossen sind. Diese elektrischen Anschlussteile sind von der Kappe 4, die aus undurchsichtigem Kunststoffmaterial besteht, abgedeckt. Da unterhalb der Kappe 4 einer der für die Montage der Leuchte 1 benötigten Durchbrüche 12 im Träger 3 angeordnet ist, ist die Kappe 4 lösbar – mittels Schrauben 13 – auf dem Träger 3 befestigt.

Die in die Fassung eingesetzte Lampe 2 erstreckt sich parallel zum Träger 3. In dem von der Lampe 2 im wesentlichen überdeckten Teil des Trägers 3 ist ein Vorschaltgerät 14 angeordnet. Dieses ist auf einer Halterung 15 aufgenietet und erst die Halterung 15, deren Rückseite so ausgebildet ist, dass sie als Reflektor für die Lampe 2 fungiert, ist ihrerseits am Träger 3 befestigt.

An der Aussenseite des Trägerbodens ist eine Metallplatte 16, in diesem Ausführungsbeispiel aus Aluminium, eingelassen. Diese ist in der Vertiefung am Trägerboden durch wärme- oder ultraschallverformte Nippel 17 befestigt. Sie kann auch ganz im Kunststoff eingebettet sein (z.B. umspritzt).

Für die Montage der Leuchte 1 sind im Träger 3 die bereits genannten Durchbrüche 12 vorgesehen, die zweckmässigerweise im Bereich der Nippel 17 angeordnet sind. Soll die Leuchte durch direktes Anschrauben an Wänden, Regalen usw. befestigt werden, werden von Lampenseite aus – wobei Kappe 4 und Haube 5 abgenommen sein müssen – Schrauben durch diese Durchbrüche 12 geführt. Zur indirekten Befestigung, beispielsweise über zusätzliche Halteelemente wie Haltewinkel (s. DE-A 2 944 967), sind im Träger 3 über den Durchbrüchen 12 Muttern 18 angeordnet, so dass die Halteelemente von aussen an der Leuchte 1 befestigt werden können.

Die einseitig gesockelte Kompakt-Leuchtstofflampe 2, deren Entladungsgefäss beispielsweise aus zwei parallelen, miteinander verbundenen Schenkeln besteht, ist von der lichtdurchlässigen Haube 5 abgedeckt. Diese ist mit geeigneten Mitteln, die mit dem Träger 3 zusammenwirken, ausgestattet, so dass sie leicht über die Lampe 2 geschoben und auch wieder abgenommen werden kann.

Zur Streuung des Lichts bzw. zur optischen Auflösung der beiden Schenkel der Lampe 2 ist die Haube 5 an ihrer Innenoberfläche mit speziell ausgeführten Prismen 19 versehen, die eine gleichmässige Lichtverteilung gewährleisten.

**Patentansprüche**

1. Kompakte Leuchte für eine schlanke, einseitig gesockelte Kompakt-Leuchtstofflampe (2), bestehend aus einem Träger (3), einem im Träger mittels einer gesonderten Halterung (15) befestigten Vorschaltgerät (14) und elektrischen Anschlussteilen sowie einer die elektrischen Anschlussteile abdeckenden Kappe (4) und einer die Lampe abdeckenden Haube (5), wobei Träger (3), Kappe (4) und Haube (5) aus Kunststoff bestehen und wobei zur Verteilung bzw. Ableitung der Wärme des Vorschaltgerätes (14) am Träger (3) eine Metallplatte (16) angeordnet ist, dadurch gekennzeichnet, dass das Vorschaltgerät (14) auf der dem Träger (3) zugewandten Seite der Halterung (15) befestigt ist, während die zur Lampe (2) hin gewandte Seite der Halterung (15) als Reflektor ausgebildet ist.

2. Leuchte nach Anspruch 1, dadurch gekennzeichnet, dass das Vorschaltgerät (14) auf der Halterung (15) aufgenietet ist.

3. Leuchte nach Anspruch 1, dadurch gekennzeichnet, dass für eine wahlweise Montage der Leuchte sowohl von innen als auch von aussen im Träger (3) Durchbrüche (12) vorgesehen sind, über denen Muttern (18) angeordnet sind, und wobei für eine Montage der Leuchte von innen die Kappe (4) vom Träger (3) abnehmbar ist.

4. Leuchte nach Anspruch 1, dadurch gekennzeichnet, dass die Haube (5) an ihrer Innenoberfläche mit speziell ausgeführten Prismen (19) zur optischen Auflösung der beiden Schenkel der Lampe (2) versehen ist.

**Claims**

1. A compact lighting fixture for a slim compact fluorescent lamp (2) with a lamp base on one side, consisting of a holder (3), a control unit (14) fixed in the holder by means of a separate mounting (15), electrical connecting parts and a cap (4) covering the electrical connecting parts and a cover (5) covering the lamp, wherein the holder (3), the cap (4) and the cover (5) are made of synthetic resin and wherein a metal plate (16) is disposed on the holder (3) to dissipate or carry off the heat of the control unit (14), characterised in that the control unit (14) is fixed on the side of the mounting (15) remote from the holder (3) while the side of the mounting (15) facing towards the lamp (2) takes the form of a reflector.

2. A lighting fixture as claimed in Claim 1, characterised in that the control unit (14) is riveted to the mounting (15).

3. A lighting fixture as claimed in Claim 1, characterised in that for optional fitting of the lighting fixture from either inside or outside, the holder (3) is provided with openings (12) over which nuts (18) are disposed, and wherein the cap (4) can be detached from the holder (3) for fitting of the lighting fixture from inside.

4. A lighting fixture as claimed in Claim 1, characterised in that on its inside surface, the cover (5) is provided with specially formed prisms (19) for optical resolution of the two arms of the lamp (2).

**Revendications**

1. Luminaire compact pour une lampe fluorescente compacte (2), de forme effilée et munie d'un culot d'un côté, constitué d'un support (3), d'un ballast (14) attaché au moyen d'une fixation (15) particulière, de pièces de raccordement électrique, d'un capot (4) recouvrant les pièces de raccordement électrique, ainsi que d'une calotte (5) recouvrant la lampe; le support (3), le capot (4) et la calotte (5) étant en matière plastique et une plaque métallique (16) étant disposée sur le support (3) pour la répartition et la dissipation de la chaleur du ballast (14), caractérisé en ce que le ballast est attaché sur le côté de la fixation (15) tourné vers le support (3), tandis que le côté de la fixation (15) tourné vers la lampe (2) est réalisé comme un réflecteur.

2. Luminaire selon la revendication 1, caractérisé en ce que le ballast (14) est riveté sur la fixation (15).

3. Luminaire selon la revendication 1, caractérisé en ce que, pour permettre le montage du luminaire au choix par l'intérieur ou par l'extérieur, le support (3) est pourvu d'ouvertures (12), au-dessus desquelles sont disposés des écrous (18), le capot (4) pouvant être retiré du support (3) en vue du montage du luminaire par l'intérieur.

4. Luminaire selon la revendication 1, caractérisé en ce que la surface interne de la calotte (5) est pourvue de prismes (19) de conformation particulière afin que les deux branches de la lampe (2) apparaissent optiquement rassemblées.

FIG.1

**FIG. 2**